(19) Europäisches Patentamt
European Patent Office
Office européen des brevets

(11) **EP 3 262 395 B1**

(12) **EUROPÄISCHE PATENTSCHRIFT**

(45) Veröffentlichungstag und Bekanntmachung des Hinweises auf die Patenterteilung:
**16.09.2020 Patentblatt 2020/38**

(21) Anmeldenummer: **16701960.3**

(22) Anmeldetag: **29.01.2016**

(51) Int Cl.:
**G01N 11/16** *(2006.01)*  **G01F 23/296** *(2006.01)*
**G01N 9/00** *(2006.01)*

(86) Internationale Anmeldenummer:
**PCT/EP2016/051935**

(87) Internationale Veröffentlichungsnummer:
**WO 2016/134915 (01.09.2016 Gazette 2016/35)**

(54) **VIBRONISCHER SENSOR**

VIBRONIC SENSOR

DÉTECTEUR VIBRONIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.02.2015 DE 102015102834**

(43) Veröffentlichungstag der Anmeldung:
**03.01.2018 Patentblatt 2018/01**

(73) Patentinhaber: **Endress+Hauser SE+Co. KG**
**79689 Maulburg (DE)**

(72) Erfinder: **BRENGARTNER, Tobias**
**79312 Emmendingen (DE)**

(74) Vertreter: **Andres, Angelika Maria**
**Endress+Hauser Group Services**
**(Deutschland) AG+Co. KG**
**Colmarer Straße 6**
**79576 Weil am Rhein (DE)**

(56) Entgegenhaltungen:
**WO-A1-2014/179050      DE-A1-102006 034 105**
**DE-A1-102012 113 045   US-A- 5 323 638**

**Beschreibung**

Die Erfindung betrifft einen vibronischen Sensor zur Bestimmung und/oder Überwachung zumindest einer Prozessgröße eines Mediums sowie ein Verfahren zum Betreiben des vibronischen Sensors.

Vibronische Sensoren finden vielfach Anwendung in der Prozess- und/oder Automatisierungstechnik. Im Falle von Füllstandsmessgeräten weisen sie zumindest eine mechanisch schwingfähige Einheit, wie beispielsweise eine Schwinggabel, einen Einstab oder eine Membran auf. Diese wird im Betrieb mittels einer Antriebs-/Empfangseinheit, häufig in Form einer elektromechanischen Wandlereinheit zu mechanischen Schwingungen angeregt, welche wiederum beispielsweise ein piezoelektrischer Antrieb oder ein elektromagnetischer Antrieb sein kann. Die mechanisch schwingfähige Einheit kann im Falle von Durchflussmessgeräten aber auch als schwingfähiges Rohr ausgebildet sein, welches von dem jeweiligen Medium durchflossen wird, wie beispielsweise in einem nach dem Coriolis-Prinzip arbeitenden Messgerät.

Entsprechende Feldgeräte werden von der Anmelderin in großer Vielfalt hergestellt und im Falle von Füllstandsmessgeräten beispielsweise unter der Bezeichnung LIQUIPHANT oder SOLIPHANT vertrieben. Die zugrundeliegenden Messprinzipien sind im Prinzip aus einer Vielzahl von Veröffentlichungen bekannt. Die Antriebs-/Empfangseinheit regt die mechanisch schwingfähige Einheit mittels eines elektrischen Anregesignals zu mechanischen Schwingungen an. Umgekehrt kann die Antriebs-/Empfangseinheit die mechanischen Schwingungen der mechanisch schwingfähigen Einheit empfangen und in ein elektrisches Empfangssignal umwandeln. Bei der Antriebs-/Empfangseinheit handelt es sich entsprechend entweder um eine separate Antriebseinheit und eine separate Empfangseinheit, oder um eine kombinierte Antriebs-/Empfangseinheit.

Dabei ist die Antriebs-/Empfangseinheit in vielen Fällen Teil eines rückgekoppelten elektrischen Schwingkreises, mittels welchem die Anregung der mechanisch schwingfähigen Einheit zu mechanischen Schwingungen erfolgt. Beispielsweise muss für eine resonante Schwingung die Schwingkreisbedingung, gemäß welcher der Verstärkungsfaktor ≥1 ist und alle im Schwingkreis auftretenden Phasen ein Vielfaches von 360° ergeben, erfüllt sein.

Zur Anregung und Erfüllung der Schwingkreisbedingung muss eine bestimmte Phasenverschiebung zwischen dem Anregesignal und dem Empfangssignal gewährleistet sein. Deshalb wird häufig ein vorgebbarer Wert für die Phasenverschiebung, also ein Sollwert für die Phasenverschiebung zwischen dem Anregesignal und dem Empfangssignal eingestellt. Hierfür sind aus dem Stand der Technik unterschiedlichste Lösungen, sowohl analoge als auch digitale Verfahren, bekannt geworden. Prinzipiell kann die Einstellung der Phasenverschiebung beispielsweise durch Verwendung eines geeigneten Filters vorgenommen werden, oder auch mittels eines Regelkreises auf eine vorgebbare Phasenverschiebung, den Sollwert, geregelt werden. Aus der DE102006034105A1 ist beispielsweise bekannt geworden, einen einstellbaren Phasenschieber zu verwenden. Die zusätzliche Integration eines Verstärkers mit einstellbarem Verstärkungsfaktor zur zusätzlichen Regelung der Schwingungsamplitude wurde dagegen in der DE102007013557A1 beschrieben. Die DE102005015547A1 schlägt die Verwendung eines Allpass-Filters vor. Die Einstellung der Phasenverschiebung ist außerdem mittels eines sogenannten Frequenzsuchlaufs möglich, wie beispielsweise in der der DE102009026685A1, DE102009028022A1, und DE102010030982A1 offenbart. Die Phasenverschiebung kann aber auch mittels einer Phasenregelschleife (engl. Phase-Locked-Loop, PLL) auf einen vorgebbaren Wert geregelt werden. Ein hierauf basierendes Anregungsverfahren ist Gegenstand der DE00102010030982A1.

Sowohl das Anregesignal als auch das Empfangssignal sind charakterisiert durch ihre Frequenz f, Amplitude A und/oder Phase Φ. Entsprechend werden Änderungen in diesen Größen üblicherweise zur Bestimmung der jeweiligen Prozessgröße herangezogen, wie beispielsweise ein vorgegebener Füllstand eines Mediums in einem Behälter, oder auch die Dichte und/oder Viskosität eines Mediums oder der Durchfluss eines Mediums durch ein Rohr. Im Falle eines vibronischen Grenzstandschalters für Flüssigkeiten wird beispielsweise unterschieden, ob die schwingfähige Einheit von der Flüssigkeit bedeckt ist oder frei schwingt. Diese beiden Zustände, der Freizustand und der Bedecktzustand, werden dabei beispielsweise anhand unterschiedlicher Resonanzfrequenzen, also einer Frequenzverschiebung, unterschieden. Die Dichte und/oder Viskosität wiederum lassen sich mit einem derartigen Messgerät nur ermitteln, wenn die schwingfähige Einheit vom Medium bedeckt ist.

Wie beispielweise in der DE10050299A1 beschrieben, kann die Viskosität eines Mediums mittels eines vibronischen Sensors anhand der Frequenz-Phase-Kurve ($\Phi$=g(f)) bestimmt werden. Dieses Vorgehen basiert auf der Abhängigkeit der Dämpfung der schwingfähigen Einheit von der Viskosität des jeweiligen Mediums. Dabei gilt, dass je geringer die Viskosität ist, desto steiler fällt die Frequenz-Phase-Kurve ab. Um den Einfluss der Dichte auf die Messung zu eliminieren, wird die Viskosität anhand einer durch zwei unterschiedliche Werte für die Phase verursachten Frequenzänderung bestimmt, also mittels einer Relativmessung. Dazu können entweder zwei unterschiedliche Phasenwerte eingestellt und die zugehörige Frequenzänderung bestimmt werden, oder es wird ein vorgegebenes Frequenzband durchfahren und festgestellt, wenn zumindest zwei vorgegebene Phasenwerte erreicht werden.

Aus der DE102007043811A1 ist darüber hinaus bekannt geworden, aus einer Änderung der Eigenfrequenz und/oder Resonanzfrequenz und/oder der Phasenlage auf eine Änderung der Viskosität zu schließen und/oder aufgrund entsprechend hinterlegter Abhängigkeiten der Schwingungen der schwingfähigen Einheit von der Viskosität des jeweiligen Mediums die Viskosität zu bestimmen. Auch bei diesem Vorgehen muss die Abhängigkeit der Bestimmung der Viskosität von der Dichte des Mediums berücksichtigt werden.

Zur Bestimmung und/oder Überwachung der Dichte eines Mediums sind aus der DE10057974A1 ein Verfahren sowie eine Vorrichtung bekannt geworden, mittels welcher/welchem der Einfluss von zumindest einer Störgröße, beispielswese der Viskosität, auf die Schwingungsfrequenz der mechanisch schwingfähigen Einheit zu ermitteln und entsprechend zu kompensieren. In der DE102006033819A1 ist ferner beschrieben, eine vorgebbare Phasenverschiebung zwischen dem Anregesignal und dem Empfangssignal einzustellen, bei welcher Auswirkungen von Änderungen der Viskosität des Mediums auf die mechanischen Schwingungen der mechanisch schwingfähigen Einheit vernachlässigbar sind. Dabei wird die Dichte im Wesentlichen nach der Formel

$$\rho_{Med} = \frac{1}{K}\left[\left(\frac{f_{0,Vak} + C \cdot t + A \cdot t^2}{f_{T,P,Med}}\right)^2 \cdot (1 + D \cdot p) - 1\right]$$

Bestimmt, wobei K die Dichteempfindlichkeit der mechanisch schwingfähigen Einheit ist, $F_{0,vak}$ die Frequenz der mechanischen Schwingungen im Vakuum, C und A den linearen, bzw. quadratischen Temperaturkoeffizienten der mechanisch schwingfähigen Einheit, t die Prozesstemperatur, $F_{0,med}$ die Frequenz der mechanischen Schwingungen im Medium, D den Druckkoeffizienten, und p der Druck des Mediums.

Mit der empirisch abgeleiteten Annahme, dass die Messung für eine bestimmte vorgebbare Phasenverschiebung unabhängig von der Viskosität ist, ergeben sich Einschränkungen für die Anwendbarkeit der beschriebenen Messprinzipien. Es ist nämlich so, dass eine maximal zulässige Viskosität für das jeweilige Medium bestimmt werden muss, bis zu welcher das Messprinzip zur Dichtebestimmung überhaupt eine genaue Messung ermöglicht.

Nachteilig bei den genannten Vorrichtungen und Verfahren ist zum einen, dass für die Bestimmung der Viskosität des Mediums dessen Dichte berücksichtigt werden muss und umgekehrt. Zum anderen basieren die jeweiligen Messprinzipien auf empirisch ermittelten Zusammenhängen. Daraus ergeben sich gegebenenfalls Ungenauigkeiten bei der Bestimmung der Dichte bzw. der Viskosität sowie Einschränkungen für die möglichen Anwendungsbereiche.

Aus dem Dokument WO2014/179050A1 ist ein vibronischer Sensor zur Bestimmung der Dichte und/oder Viskosität eines Mediums bekannt geworden, welcher mittels unterschiedlicher Anregungsfrequenzen zu mechanischen Schwingungen angeregt wird. Die Dichte und Viskosität werden aus dem Verhältnis einer Eingangs- und Ausgangsspannung, und aus der Dämpfungskonstante bestimmt. Im Falle der US5323638A werden die Dichte und/oder Viskosität anhand einer Resonanzfrequenz und anhand eines über die Güte ermittelten Dämpfungsgrades der schwingfähigen Einheit ermittelt.

Der vorliegenden Erfindung liegt die Aufgabe zugrunde, den Anwendungsbereich für die Bestimmung der Dichte und/oder Viskosität mittels eines vibronischen Sensors zu erweitern.

Diese Aufgabe wird gelöst durch die Merkmale des Vorrichtungsanspruchs 1 sowie durch die Merkmale des Verfahrensanspruchs 9.

Erfindungsgemäß wird ein vibronischer Sensor zur Bestimmung und/oder Überwachung zumindest der Dichte und der Viskosität eines Mediums in einem Behälter bereitgestellt, welcher zumindest eine mechanisch schwingfähige Einheit, eine Antriebs-/Empfangseinheit und eine Elektronikeinheit umfasst. Die Antriebs-/Empfangseinheit ist dazu ausgestaltet, mittels eines elektrischen Anregesignals die mechanisch schwingfähige Einheit zu mechanischen Schwingungen anzuregen, und die mechanischen Schwingungen der mechanisch schwingfähigen Einheit zu empfangen und in ein elektrisches Empfangssignal umzuwandeln. Ferner ist die Elektronikeinheit dazu ausgestaltet, das Anregesignal ausgehend vom Empfangssignal derart zu erzeugen, dass eine vorgebbare Phasenverschiebung zwischen dem Anregesignal und Empfangssignal vorliegt, zumindest eine erste vorgebbare Phasenverschiebung und eine vorgebbare zweite Phasenverschiebung einzustellen, eine der jeweiligen vorgebbaren Phasenverschiebung entsprechende erste Frequenz und zweite Frequenz zu ermitteln, und aus den beiden Frequenzen mittels einer ersten analytischen Formel die Dichte und/oder mittels einer zweiten analytischen Formel die Viskosität des Mediums zu bestimmen. Insbesondere können die erste und zweite Phasenverschiebung in vorgebbaren Zeitintervallen abwechselnd eingestellt werden. Die empirische Grundlage der Dichte- und/oder Viskositätsbestimmung wird also erfindungsgemäß durch eine analytische Basis ersetzt. Durch dieses Vorgehen werden die Interaktionen zwischen der schwingfähigen Einheit und dem Medium berücksichtigt. Erfindungsgemäß muss dazu die Elektronikeinheit zur Auswertung der Frequenzen der schwingfähigen Einheit bei zwei unterschiedlichen vorgebbaren Phasenverschiebungen zwischen dem Anregesignal und dem Empfangssignal ausgestaltet sein. Der entsprechende vibronische Sensor ist dann universell für alle viskosen Medien, in welchen die schwingfähige Einheit eine Schwingungsbewegung ausführen kann, einsetzbar und dazu geeignet sowohl die Dichte als auch die Viskosität zu ermitteln. Darüber hinaus wird durch die erfindungsgemäße Lösung die Genauigkeit der Bestimmung der Dichte und/oder Viskosität im Vergleich zu den aus dem Stand der Technik bekannten Methoden erhöht, da einer wechselseitigen Beeinflussung der beiden Größen Dichte und Viskosität berücksichtigt wird. Dies wird durch die nachfolgenden Herleitungen noch deutlicher.

Erfindungsgemäß beträgt die erste vorgebbare Phasenverschiebung +/-90°, und die zweite vorgebbare Phasenverschiebung 45° oder -135°. Eine Phasenverschiebung von +/-90° entspricht einer resonanten Anregung der schwingfähigen Einheit entsprechend der Grundschwingungsmode. Dabei ist es so, dass ein rein mechanischer Oszillator bei einer ersten vorgebbaren Phasenverschiebung von -90° resonante mechanische Schwingungen ausführt. Dann beträgt die zweite vorgebbare Phasenverschiebung -135°. Unter Berücksichtigung der Phasenverschiebungen durch eine Elektronikeinheit und Antriebs-/Empfangseinheit wird jedoch, insbesondere im Falle eines von der Anmelderin vertriebenen LIQUIPHANTEN, eine zusätzliche Phasenverschiebung von +180° erzeugt, so dass die erste vorgebbare Phasenverschiebung +90° und die zweite vorgebbare Phasenverschiebung +45° beträgt.

Es ist ferner von Vorteil, wenn die schwingfähige Einheit in einer definierten Position innerhalb des Behälters angeordnet ist, derart, dass sie bis zu einer bestimmbaren Eintauchtiefe in das Medium eintaucht.

Weiter ist es von Vorteil, wenn die Elektronikeinheit dazu ausgestaltet ist, einen vorgegebenen Füllstand des Mediums in dem Behälter zu bestimmen und/oder zu überwachen.

In einer Ausgestaltung ist die schwingfähige Einheit eine Membran, ein Einstab oder eine Schwinggabel umfassend zwei auf eine Membran 8 aufgebrachte Schwingstäbe.

In einer Ausgestaltung umfasst die Antriebs-/Empfangseinheit ein piezoelektrisches Element. Alternativ handelt es sich bei der Antriebs-/Empfangseinheit um eine elektromagnetische Antriebs-/Empfangseinheit.

Gemäß einer besonders bevorzugten Ausgestaltung resultieren die erste analytische Formel und/oder die zweite analytische Formel aus der Lösung einer Bewegungsgleichung für eine Schwingungsbewegung der schwingfähigen Einheit, welche die Interaktion der schwingfähigen Einheit mit dem Medium in Form einer Druckkraft und einer Reibungskraft, welche durch das die schwingfähige Einheit umgebende Medium entstehen, sowie einer Reibungskraft, welche infolge einer gleichförmigen Bewegung der schwingfähigen Einheit innerhalb des Mediums entsteht, berücksichtigt. Aufgrund der Bestrebung, eine analytische Lösung der Bewegungsgleichung zu erhalten, wird die Schwingungsbewegung, welche in der Realität einer Biegeschwingung entspricht, durch eine Drehschwingung angenähert. Ferner dienen als Annäherung der Geometrie der schwingfähigen Einheit für jeden der zwei Gabelzinken zwei elliptische Zylinder unterschiedlicher Ausmaße.

Wenn es sich bei der schwingfähigen Einheit um eine Schwinggabel umfassend zwei auf eine Membran aufgebrachte Schwingstäbe handelt, ist es von Vorteil, wenn die Elektronikeinheit dazu ausgestaltet ist, die Dichte im Wesentlichen nach der Formel $\rho = -\frac{T_2 + T_6 + \sqrt{T_3 + T_4}}{\hat{B}_a T_5}$ zu berechnen und/oder die Viskosität nach der Formel $\eta = \frac{T_1 + \omega_{135}(T_2 - \sqrt{T_3 + T_4})}{\hat{C}_a T_5}$ zu berechnen, wobei

$$T_1 = -2\hat{B}_a \hat{C}_a \omega_{90}^2 \left( \gamma \omega_{135} \omega_{90}^2 + D_r(T)(-\omega_{135}^2 + \omega_{90}^2) \right),$$

$$T_2 = \hat{A}_a^2 D_r(T)\omega_{90}^3 + \hat{A}_a^2 \gamma \omega_{135} \omega_{90}^3 - \hat{A}_a^2 \theta \omega_{135}^2 \omega_{90}^3,$$

$$T_3 = \hat{A}_a^2 \omega_{90}^3 \hat{A}_a^2 \left( D_r(T) + \omega_{135}(\gamma - \Theta \omega_{135}) \right)^2 \omega_{90}^2,$$

$$T_4 = \hat{A}_a^2 \omega_{90}^3 4\hat{B}_a \hat{C}_a \omega_{135} (D_r(T) - \Theta \omega_{90}^2) \left( -\gamma \omega_{135} \omega_{90}^2 + D_r(T)(\omega_{135}^2 - \omega_{90}^2) \right),$$

$$T_5 = 2\omega_{135} \omega_{90}^3 \left( -\hat{A}_a^2 \omega_{135} + \hat{B}_a \hat{C}_a \omega_{90} \right),$$

und

$$T_6 = 2\hat{B}_a \hat{C}_a \omega_{135} \omega_{90}^2 (-D_r(T) + \Theta \omega_{90}^2)$$

ist,

wobei $\Theta$ das Massenträgheitsmoment von den zwei der Schwingstäben der schwingfähigen Einheit im nicht von Medium bedeckten Zustand ist,
wobei $\omega_0$ die Kreisfrequenz der schwingfähigen Einheit im ungedämpften Fall ist,
wobei $D_r(T)$ die temperaturabhängige Drehsteifigkeit der Membran ist,
wobei $\gamma$ die Dämpfung der nicht mit Medium bedeckten schwingfähigen Einheit ist, und
wobei $\hat{A}_a$, $\hat{B}_a$ und $\hat{C}_a$ geometrieabhängige Parameter sind.

Für die Kreisfrequenz der schwingfähigen Einheit wurde für die analytische Herleitung von einer schwingfähigen Einheit im Vakuum bei definierter Temperatur ausgegangen. Praktisch kann jedoch die Dämpfung in Luft vernachlässigt werden, so dass für den "ungedämpften Fall" im Folgenden davon ausgegangen wird, dass die schwingfähige Einheit nicht von Medium bedeckt ist. Die Dämpfung der nicht mit Medium bedeckten schwingfähigen Einheit beschreibt im Prinzip die intrinsische Dämpfung der schwingfähigen Einheit. Wieder wird hierfür im Folgenden die Dämpfung durch Luft vernachlässigt. In diesen Formeln ist die Druckabhängigkeit bei der Bestimmung der Dichte und/oder Viskosität nicht in das analytische Modell integriert. Sie wird jedoch durch ein empirisch ermitteltes Polynom, ähnlich wie bei den Verfahren gemäß dem Stand der Technik, berücksichtigt.

Bezüglich des Verfahrens wird die erfindungsgemäße Aufgabe gelöst durch ein Verfahren zur Bestimmung der Dichte und Viskosität eines Mediums in einem Behälter mittels eines vibronischen Sensors, insbesondere mittels eines Sensors gemäß zumindest einem der vorhergehenden Ansprüche, wobei eine schwingfähige Einheit mittels eines elektrischen Anregesignals zu mechanischen Schwingungen angeregt wird, und die mechanischen Schwingungen der mechanisch schwingfähigen Einheit empfangen und in ein elektrisches Empfangssignal umgewandelt werden, und wobei das Anregesignal ausgehend vom Empfangssignal derart erzeugt wird, dass eine vorgebbare Phasenverschiebung zwischen dem Anregesignal und dem Empfangssignal vorliegt. Erfindungsgemäß wird zumindest eine erste vorgebbare Phasenverschiebung und eine zweite vorgebbare Phasenverschiebung eingestellt, wobei eine der jeweiligen vorgebbaren Phasenverschiebung entsprechende erste Frequenz und zweite Frequenz ermittelt werden, und wobei aus den beiden Frequenzen mittels einer ersten analytischen Formel die Dichte und/oder mittels einer zweiten analytischen Formel die Viskosität des Mediums bestimmt wird.

Erfindungsgemäß wird als erste vorgebbare Phasenverschiebung +/-90°, und als zweite vorgebbare Phasenverschiebung 45° oder -135° eingestellt, wobei im Falle, dass die erste vorgebbare Phasenverschiebung -90° ist, die zweite vorgebbare Phasenverschiebung -135° beträgt, und wobei im Falle, dass die erste vorgebbare Phasenverschiebung +90° beträgt, die zweite vorgebbare Phasenverschiebung -90 beträgt.

Eine Ausgestaltung sieht vor, dass ein vorgegebener Füllstand des Mediums in dem Behälter überwacht wird.

Eine besonders bevorzugte Ausgestaltung beinhaltet, dass die erste analytische Formel und/oder die zweite analytische Formel aus der Lösung einer Bewegungsgleichung für eine Schwingungsbewegung der schwingfähigen Einheit resultieren, bei deren Aufstellung die Interaktion der schwingfähigen Einheit mit dem Medium in Form einer Druckkraft und einer Reibungskraft, welche durch das die schwingfähige Einheit umgebende Medium entstehen, sowie einer Reibungskraft, welche infolge einer gleichförmigen Bewegung der schwingfähigen Einheit innerhalb des Mediums entsteht, berücksichtigt werden. Aufgrund der Bestrebung, eine analytische Lösung der Bewegungsgleichung zu erhalten, wird die Schwingungsbewegung, welche in der Realität einer Biegeschwingung entspricht, durch eine Drehschwingung angenähert. Ferner dienen als Annäherung der Geometrie der schwingfähigen Einheit für jeden der zwei Gabelzinken zwei elliptische Zylinder unterschiedlicher Ausmaße. Hierzu sei erwähnt, dass für die schwingfähige Einheit ohne Beschränkung der Allgemeinheit auch eine beliebige andere Geometrie gewählt werden kann. In diesem Falle müssen jedoch die geometrischen Koeffizienten entsprechend angepasst werden.

Im Falle, dass es sich bei der schwingfähigen Einheit um eine Schwinggabel umfassend zwei auf eine Membran aufgebrachte Schwingstäbe handelt, ist es dann von Vorteil, wenn die Dichte im Wesentlichen nach der Formel

$$\rho = -\frac{T_2 + T_6 + \sqrt{T_3 + T_4}}{\hat{B}_a T_5}$$ und/oder die Viskosität nach der Formel $\eta = \dfrac{T_1 + \omega_{135}(T_2 - \sqrt{T_3 + T_4})}{\hat{C}_a T_5}$ berechnet wird, wobei

$$T_1 = -2\hat{B}_a \hat{C}_a \omega_{90}^2 \left( \gamma \omega_{135} \omega_{90}^2 + D_r(T)(-\omega_{135}^2 + \omega_{90}^2) \right),$$

$$T_2 = \hat{A}_a^2 D_r(T) \omega_{90}^3 + \hat{A}_a^2 \gamma \omega_{135} \omega_{90}^3 - \hat{A}_a^2 \theta \omega_{135}^2 \omega_{90}^3,$$

$$T_3 = \hat{A}_a^2 \omega_{90}^3 \hat{A}_a^2 \left( D_r(T) + \omega_{135}(\gamma - \Theta \omega_{135}) \right)^2 \omega_{90}^2,$$

$$T_4 = \hat{A}_a^2 \omega_{90}^3 4 \hat{B}_a \hat{C}_a \omega_{135} (D_r(T) - \Theta \omega_{90}^2) \left( -\gamma \omega_{135} \omega_{90}^2 + D_r(T)(\omega_{135}^2 - \omega_{90}^2) \right),$$

$$T_5 = 2\omega_{135}\omega_{90}^3\left(-\hat{A}_a^2\omega_{135} + \hat{B}_a\hat{C}_a\omega_{90}\right),$$

und

$$T_6 = 2\hat{B}_a\hat{C}_a\omega_{135}\omega_{90}^2\left(-D_r(T) + \Theta\omega_{90}^2\right)$$

ist,

wobei $\Theta$ das Massenträgheitsmoment der Schwingstäbe der schwingfähigen Einheit im nicht von Medium bedeckten Zustand ist,
wobei $\omega_0$ die Kreisfrequenz der schwingfähigen Einheit im ungedämpften Fall ist,
wobei $D_r(T)$ die temperaturabhängige Drehsteifigkeit der Membran ist,
wobei $\gamma$ die Dämpfung der nicht mit Medium bedeckten schwingfähigen Einheit ist, und
wobei $\hat{A}_a$, $\hat{B}_a$ und $\hat{C}_a$ geometrieabhängige Parameter sind.

Zusammenfassend ergeben sich durch die vorliegende Erfindung gegenüber dem Stand der Technik folgende Vorteile:

- Die Dichte kann unabhängig von der Viskosität des Mediums ermittelt werden,
- Die Viskosität kann unabhängig von der Dichte des Mediums ermittelt werden, und
- die erfindungsgemäßen analytischen Formeln für die Dichte und/oder Viskosität sind genauer als die aus dem Stand der Technik bekannten Formeln.

Die Erfindung sowie ihre vorteilhaften Ausgestaltungen werden nachfolgend anhand der Figuren Fig. 1 - Fig. 3 näher beschrieben. Es zeigt:

Fig. 1: eine schematische Skizze eines vibronischen Sensors gemäß Stand der Technik,
Fig. 2: eine schematische Zeichnung einer Schwinggabel, und
Fig. 3 illustriert die Näherung der Geometrie der Schwinggabel durch elliptische Zylinder.

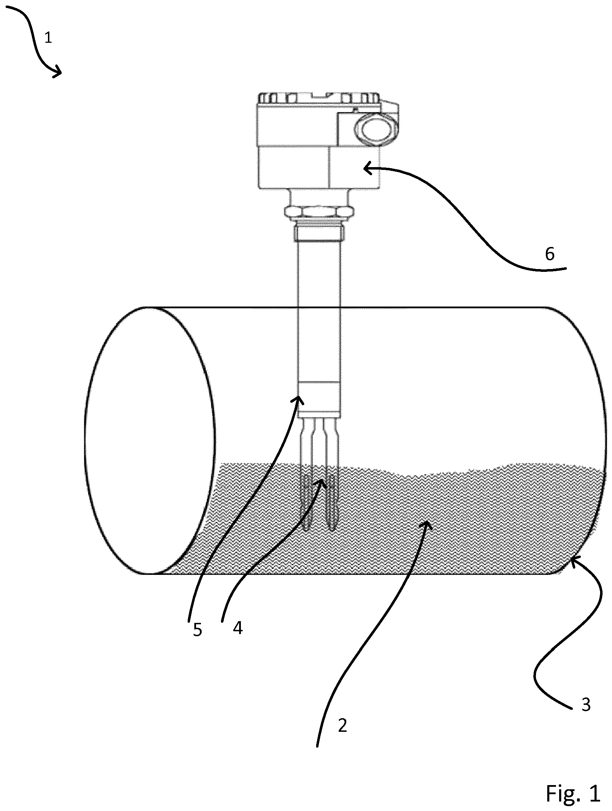

In Fig. 1 ist ein vibronischer Sensor 1 gezeigt. Dargestellt ist eine schwingfähige Einheit 4 in Form einer Schwinggabel, welche teilweise in ein Medium 2 eintaucht, welches sich in einem Behälter 3 befindet. Die schwingfähige Einheit wird mittels der Anrege-/Empfangseinheit 5 zu mechanischen Schwingungen angeregt, und kann beispielsweise ein piezoelektrischer Stapel- oder Bimorphantrieb sein. Es versteht sich jedoch von selbst, dass auch andere Ausgestaltungen eines vibronischen Sensors unter die Erfindung fallen. Weiterhin ist eine Elektronikeinheit 6 dargestellt, mittels welcher die Signalerfassung, -auswertung und/oder - speisung erfolgt.

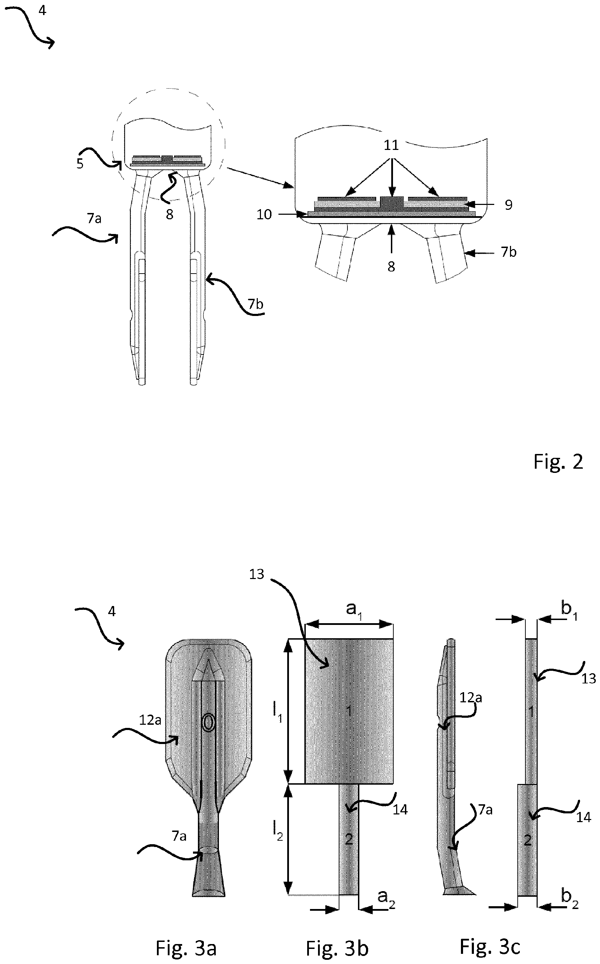

In Fig. 2 ist eine schwingfähige Einheit 4 in Form einer Schwinggabel, wie sie beispielsweise im von der Anmelderin unter dem Namen LIQUIPHANT vertriebenen vibronischen Sensor 1 integriert wird, gezeigt. Die Schwinggabel 4 umfasst zwei auf eine Membran 8 aufgebrachte Schwingstäbe 7a,7b, oder auch Gabelzinken. Um die Schwingstäbe 7a,7b in mechanische Schwingungen zu versetzen, wird mittels einer auf der den Schwingstäben 7a,7b abgewandten Seite der Membran 8 stoffschlüssig angebrachten Antriebs-/Empfangseinheit 5 eine Kraft auf die Membran 8 aufgeprägt. Die Antriebs-/Empfangseinheit 5 ist eine elektromechanische Wandlereinheit, und umfasst beispielsweise ein piezoelektrisches Element 9, oder auch einen elektromagnetischen Antrieb. Entweder sind die Antriebseinheit 5 und die Empfangseinheit als zwei separate Einheiten aufgebaut, oder als kombinierte Antriebs-/Empfangseinheit. In der Detailzeichnung auf der rechten Seite ist die Antriebs-/Empfangseinheit 5 detailliert dargestellt. Ein piezoelektrisches Element 9 ist auf einer Steatitscheibe 10 angeordnet und mit Elektroden 11 zum Beaufschlagen des Anregesignals sowie zum Abgreifen des Empfangssignals ausgestattet.

Im Falle, dass die Antriebs-/Empfangseinheit 5 ein piezoelektrisches Element 9 umfasst, wird die der Membran 8 aufgeprägte Kraft über das Anlegen eines Anregesignals $U_A$, beispielweise in Form einer elektrischen Wechselspannung, generiert. Eine Änderung der angelegten elektrischen Spannung bewirkt eine Änderung der geometrischen Form der Antriebs-/Empfangseinheit 5, also eine Kontraktion bzw. eine Relaxation innerhalb des piezoelektrischen Elements 9 derart, dass das Anlegen einer elektrischen Wechselspannung als Anregesignal $U_A$ zu einer Schwingung der stoffschlüssig mit der Antriebs-/Empfangseinheit 5 verbundenen Membran 8 hervorruft.

Wie eingangs beschrieben, besteht das Ziel der vorliegenden Erfindung darin, den Anwendungsbereich für die Bestimmung der Dichte und/oder Viskosität mittels eines vibronischen Sensors 1 zu erweitern. Bisher basieren die Methoden zur Bestimmung der Dichte und/oder Viskosität auf empirisch ermittelten Annahmen. Erfindungsgemäß werden diese empirischen Modelle durch ein analytisches Modell zur Beschreibung der Schwingungsbewegungen eines vibronischen Sensors 1 in einem viskosen Medium ersetzt. Ein solches Modell ist bisher noch nicht verfügbar. Deshalb werden im Folgenden die Grundlagen dieses Modells kurz skizziert.

Unter der Annahme einer idealen Antriebseinheit 5 kann die schwingfähige Einheit 4 als harmonischer Einmassenschwinger beschrieben werden. Die Schwingungsbewegungen der beiden Schwingstäbe7a,7b oder Gabelzinken entspricht weitgehend der Durchbiegung eines Biegebalkens. Aufgrund der üblicherweise viel komplexeren geometrischen Struktur der schwingfähigen Einheit 4 eines vibronischen Sensors 1 ist es jedoch zweckdienlicher, die Schwingungsbewegungen der beiden Schwingstäbe7a,7b durch eine Drehbewegung anzunähern.

Abweichungen zwischen der mathematischen Beschreibung und der realen Schwingungsbewegungen, welche aus der Näherung ergeben können a posteriori durch Berücksichtigung geeigneter Korrekturterme eliminiert werden.

Die Bewegungsgleichung für eine freie erzwungene Schwingung einer schwingfähigen Einheit 4 wie in Fig. 2 in Form einer Drehbewegung ist im Prinzip aus dem Stand der Technik bekannt und kann ausgehend von den auf die beiden Schwingstäbe 7a,7b einwirkenden Drehmomenten abgeleitet werden. Werden zusätzlich noch die Interaktionen zwischen dem Fluid und der schwingfähigen Einheit berücksichtigt, so ergibt sich als Bewegungsgleichung eine Differentialgleichung 2. Ordnung:

$$M_S + M_D + M_R + M_F = M_E$$

$$\Theta\ddot{\phi}(t) + \gamma\dot{\phi}(t) + D_r\phi(t) + M_F = \phi_0 D_r \sin(\omega t).$$

Dabei beschreibt $M_F$ das Drehmoment aufgrund der Fluid-Struktur-Interaktion, $M_E$ das Erregermoment, $M_R$ das Drehmoment durch die Steifigkeit der Membran, $M_D$ das Drehmoment durch die innere Dämpfung der schwingfähigen Einheit und $M_S$ das Drehmoment aufgrund des Massenträgheitsmoments der Gabelzinken. Ferner ist $\Phi$ die Auslenkung, oder in der hier betrachteten Näherung den Drehwinkel, der Schwingstäbe 7a,7b der schwingfähigen Einheit 4 aus der Ruhelage, $\Theta$ das durch die Masse der oszillierenden Schwingstäbe 7a,7b hervorgerufene Massenträgheitsmoment, $\gamma$ den aus der inneren Dämpfung der schwingfähigen Einheit 4 resultierenden Dämpfungskoeffizienten und $D_r$ die Drehsteifigkeit aufgrund der Steifigkeit der Membran 8 beschreibt.

Eine partikuläre Lösung ergibt sich mittels des Ansatzes $\phi(t) = \phi_0 V \sin(\omega t + \varphi)$, mit der Vergrößerungsfunktion

$$V(\omega) = \frac{1}{\sqrt{4D^2\left(\frac{\omega}{\omega_0}\right)^2 + \left(1 - \left(\frac{\omega}{\omega_0}\right)^2\right)^2}},$$

welche das Amplitudenverhalten der schwingfähigen Einheit 4 beschreibt, und dem Phasengang der schwingfähigen Einheit 4

$$\tan\varphi = \frac{2D\omega\omega_0}{\omega^2 - \omega_0^2}.$$

Dabei ist $= \frac{\gamma}{2\Theta\omega_0}$ das sogenannte Lehr'sche Dämpfungsmaß, welches eine charakteristische Größe für die Güte des Schwingsystems darstellt, und $\omega_0 = \sqrt{\frac{D_r}{\Theta}}$ die Eigenfrequenz des entsprechenden ungedämpften Oszillators.

Das Drehmoment aufgrund der Fluid-Struktur-Interaktion $M_F$ ist von der Geometrie der schwingfähigen Einheit 4 abhängig und beschreibt im Prinzip die Interaktion zwischen der schwingfähigen Einheit 4 und dem jeweiligen Medium 2. Der Fall $M_F=0$ beschreibt den Fall einer Schwingung der schwingfähigen Einheit 4 außerhalb des Mediums 2.

Eine analytische Lösung der Bewegungsgleichung kann nur unter Annahme einfacher geometrischer Strukturen für die schwingfähige Einheit 4, wie beispielsweise einer Kugel (siehe auch W. Y. Shih, X. Li, H. Gu, W. H. Shih und I. A. Aksay: "Simultaneous liquid viscosity and density determination with piezoelectric unimorph cantilevers", erschienen in Journal of Applied Physics, 89(2):1497-1505, 15. 1 im Jahre 2001), einer quaderförmigen Struktur (siehe auch J. E. Sader: "Frequency response of cantilever beams immersed in viscous fluids with applications to the atomic force microscope", erschienen im Journal of Applied Physics, 84(1):64-76,1. 7 im Jahre 1998) oder eines unendlich ausgedehnten Kreiszylinders (siehe auch die Dissertation von W. Zhang: Energy Dissipations in MEMS Resonators: Fluid Damping of Flexura Resonators and Thermoelastic Damping erschienen im Dezember 2006 an der University of California), gewonnen werden. Diese Geometrien spiegeln die in der Realität viel komplexere Geometrie der schwingfähigen Einheit 4, beispielsweise in Form einer Schwinggabel eines vibronischen Sensors 1 jedoch nur sehr schlecht wieder. Viel besser eignet sich für eine Schwinggabel die Geometrie eines elliptischen Zylinders mit den Halbachsen a und b, wie beispielsweise in der Dissertaion von J. Friedmann, Untersuchungen über das Verhalten der Schwingfrequenz bei Stimmgabelgasdichtemessgeräten. an der Universität Fridericiana Karlsruhe(Technische Hochschule) an der Fakultät für Elektrotechnik vom Januar 1976, beschrieben. Durch diese Näherung fließen die realen Abmessungen der Schwingstäbe 7a,7b der schwingfähigen Einheit 4 vorteilhaft mit in die analytische Lösung ein. Diese Näherung der Geometrie für die schwingfähige Einheit 4 ist in Fig. 3 skizziert. Für die im LIQUIPHANT verwendete Schwinggabel 4 ist an jedem der beiden Schwingstäbe 7a,7b ist endseitig ein Paddel 12a,12b angeformt, wie aus Fig. 3a zu sehen ist. Um dies zu berücksichtigen muss die Geometrie der schwingfähigen Einheit durch zwei elliptische Zylinder je Schwingstab angenähert werden, wie in Fig. 3b illustriert. Der erste elliptische Zylinder 13 mit der Länge $l_1$, der Breite $a_1$ sowie der Dicke $d_1$ dient der Darstellung des jeweiligen Paddels 12a,12b, der zweite elliptische Zylinder 14 mit der Länge $l_2$, der Breite $a_2$ sowie der Dicke $d_2$der Darstellung des jeweiligen Schwingstabs 7a,7b. Fig. 3c zeigt einen Gabelzinken 7a der Schwinggabel 4 sowie die angenäherte Geometrie mit den zwei elliptischen Zylindern 13,14 nochmals in einer Seitenansicht.

Die Interaktion zwischen der schwingfähigen Einheit 4 und dem Medium 2 kommt dadurch zustande, dass das Medium 2 durch die Bewegung der schwingfähigen Einheit 4 im eingetauchten Zustand in Bewegung versetzt wird. Dies hat zur Folge dass der Bewegung der schwingfähigen Einheit 4 entgegengesetzte Kräfte $F_F$ auftreten, welche sich in Druckkräfte und Reibungskräfte unterteilen lassen. Es gilt:

$$F_F = F_D + F_R + F_{SP.}$$

Dabei ist $F_D$ die Druckkraft, $F_R$ die aufgrund des den oszillierenden elliptischen Zylinders umgebenden Fluids wirkt, und $F_{SP}$ eine zusätzlich in Folge der gleichförmigen Bewegung eines elliptischen Zylinders wirkende Reibungskraft. Zur Berechnung dieser Kräfte muss die Geschwindigkeitsverteilung des Mediums 2 in der Umgebung der schwingfähigen Einheit 4 bekannt sein. Hierzu sei auf das "Lehrbuch der Hydrodynamik" von H. Lamb, Band 26 der Reihe B. G. Teubners Sammlung von Lehrbüchern auf dem Gebiet der mathematischen Wissenschaften mit Einschluss ihrer Anwendungen aus dem B. G. Teubner Verlag, Leipzig und Berlin in der 3. Auflage von1907 verwiesen.

Ausgehend von Lehrbuch "Hydrodynamik", Band 6 der Reihe Lehrbuch der Theoretischen Physik von L. D. Landau und E. M Lifschitz erschienen im Akademie Verlag, Berlin in der 5. Auflage im Jahre 1991, kann die Geschwindigkeitsverteilung in eine normale und eine tangentiale Komponente aufgeteilt werden. Während die normale Geschwindigkeitskomponente nicht durch die Viskosität des Mediums 2 beeinflusst ist, kann sie anhand des Modells eines idealen Fluids bestimmt werden. Die tangentiale Komponente dagegen wird im Bereich um die schwingfähige Einheit 4 herum von der Viskosität des Mediums beeinflusst. Im Grenzfall unendlicher Entfernung von der schwingfähigen Einheit 4 dagegen geht die normale Komponente in die tangentiale Geschwindigkeitskomponente über.

Unter Berücksichtigung der Geometrie eines elliptischen Zylinders 13,14 lässt sich dann anhand der hydrodynamischen Grundgleichungen, der Euler'schen Gleichung, der Kontinuitätsgleichung sowie dem Thomson'schen Satz und unter Berücksichtigung des d'Alembertschen Paradoxon die Druckkraft $F_D$ pro Längeneinheit, welche auf einen elliptischen Zylinder 13,14 wirkt, bestimmen:

$$F_D = \rho a^2 \pi \frac{du}{dt},$$

wobei $\rho$ die Dichte des Mediums 2 ist und u die Geschwindigkeit der schwingfähigen Einheit 4.

Die Reibungskraft $F_R$ die aufgrund des den oszillierenden elliptischen Zylinders umgebenden Fluids wirkt, lässt sich ausgehend von der Reibungskraft $F_y$, welche auf eine unendlich ausgedehnte ebene Fläche wirkt

$$F_y = \eta \frac{\partial \overrightarrow{v_y}}{\partial x}\bigg|_{x=0}$$

ableiten, und ergibt sich zu:

$$F_R = 2\sqrt{2}bX\left(\frac{b}{a}\right)\left(\sqrt{\omega\rho\eta}\,u + \sqrt{\frac{\rho\eta}{\omega}}\frac{du}{dt}\right),$$

mit der Schwingungsfrequenz $\omega$, und der Funktion

$$X\left(\frac{b}{a}\right) = \frac{EI_1\left[1 - \frac{1}{\left(b/a\right)^2}\right] - EI_2\left[1 - \frac{1}{\left(b/a\right)^2}\right]}{\frac{b}{a}\left(\left(\frac{b}{a}\right)^2 - 1\right)},$$

wobei $EI_1$ und $EI_2$ bezeichnen die vollständigen elliptischen Integrale erster und zweiter Ordnung. Die Funktion $X\left(\frac{b}{a}\right)$ kann durch eine Exponentialfunktion angenähert werden.

Die zusätzlich in Folge der gleichförmigen Bewegung eines elliptischen Zylinders wirkende Kraft $F_{SP}$ ist eine Folge der Stoke'schen Reibungskraft. Sie ist unabhängig von der Schwingungsfrequenz $\omega$ und proportional zu der Viskosität $\eta$ des Mediums. Basierend auf der Dissertation "Energy Dissipations in MEMS Resonators: Fluid Damping of Flexural Resonators and Thermoelastic Damping" von W. Zhang sowie dem "Lehrbuch der Hydrodynamik" von H. Lamb, ergibt sich für die Reibungskraft $F_{SP}$

$$F_{SP} = \frac{4\pi\eta}{\frac{b}{a+b} - \gamma_E - \log\left(\frac{Re \cdot (a+b)}{16a}\right)} \cdot u,$$

mit der Euler Konstante $\gamma_E \approx 0{,}577$ und der Reynoldszahl Re, eine dimensionslose, charakteristische Größe für die Strömung eines Mediums 2.

Um die die Schwingungsbewegung einer schwingfähigen Einheit in einem viskosen medium beschreibende Bewegungsgleichung zu erhalten, muss die gesamte auf die schwingfähige Einheit wirkende Kraft pro Längeneinheit aufgrund der Interaktion zwischen der schwingfähigen Einheit und dem Medium $F_F$ in das zugehörige Drehmoment $M_F$ umgerechnet werden. Dabei muss berücksichtigt werden, dass jeder der Schwingstäbe durch jeweils zwei elliptische Zylinder unterschiedlicher Abmessungen angenähert wurde, wie in Zusammenhang mit Fig.3 beschrieben.

Dann ergibt sich für die Bewegungsgleichung der Schwingungsbewegung der schwingfähigen Einheit 4 in einem viskosen Medium 2

$$\left(\Theta + \widehat{\Theta}_F\right)\ddot{\phi}(t) + (\gamma + \hat{\gamma}_F)\dot{\phi}(t) + D_r\phi(t) = M_E \quad (\omega t),$$

wobei $\widehat{\Theta}_F$ das zusätzlich ankoppelnde Massenträgheitsmoment und $\hat{\gamma}_F$ die zusätzlich wirkende Drehdämpfung aufgrund der Wechselwirkung der schwingfähigen Einheit 4 mit dem Medium 2 beschreiben. Für diese Terme sind die bereits erwähnten numerisch ermittelbaren Korrekturterme zur Anpassung der Bewegungsgleichung an eine Biegeschwingung bereits berücksichtigt. Die Korrekturterme lassen sich beispielsweise aus einem Vergleich der Auslenkungen der schwingfähigen Einheit 4 im Falle einer Biegeschwingung und im Falle einer Drehschwingung mittels des Simulationstools ANSYS berechnen.

Eine partikuläre Lösung für diese Differentialgleichung zweiter Ordnung kann durch den Ansatz

$$\phi(t) = \phi_0 V(\omega)\sin(\omega t + \varphi(\omega))$$

gewonnen werden, wobei $V(\omega)$ die sogenannte Vergrößerungsfunktion, welche das Amplitudenverhalten der schwingfähigen Einheit 4 darstellt, und $\varphi(\omega)$ den Phasengang der schwingfähigen Einheit 4 beschreiben. Die Bewegungsgleichung für eine in einem viskosen Medium 2 oszillierende schwingfähige Einheit 4 unterscheidet sich somit deutlich von derjenigen im unbedeckten Falle, wie eingangs beschrieben. Die Schwingungsbewegungen der schwingfähigen Einheit 4 hängen beim Eintauchen in ein viskoses Medium 2 neben der Dichte $\rho$ und Viskosität $\eta$ auch von der Schwingfrequenz

$\omega$ der schwingfähigen Einheit 4 ab.

Die Schwingungsbewegung eines vibronischen Sensors 1 in einem viskosen Medium 2 ist gegeben durch ein zeitlich veränderliches Schwingsystem. Die Masseankopplung durch das viskose Medium 2 hängt dabei mit Änderungen der Dichte $\rho$ und/oder Viskosität $\eta$ zusammen. Die Masseankopplung ist zudem abhängig von der Schwingungsfrequenz $\omega$ der schwingfähigen Einheit 4. Es ist also streng genommen nicht möglich, einen vibronischen Sensor 1 durch eine konstante Eigenfrequenz oder ein konstantes Lehr'sches Dämpfungsmaß zu charakterisieren.

Durch die Auswertung der Schwingungsfrequenz bei einer Phasenverschiebung zwischen Anregesignal $U_A$ und Empfangssignal $U_E$ von im Wesentlichen +/-90° und von 45° oder -135° lassen sich ausgehend den jeweils ermittelten Phasengängen $\varphi(\omega)$ die bereits genannten analytischen Formeln für die Dichte und die Viskosität ermitteln:

$$\eta = \frac{T_1 + \omega_{135}(T_2 - \sqrt{T_3 + T_4})}{\hat{C}_a T_5},$$

*und*

$$\rho = -\frac{T_2 + T_6 + \sqrt{T_3 + T_4}}{\hat{B}_a T_5}.$$

Dabei gelten folgende Beziehungen:

$$T_1 = -2\hat{B}_a \hat{C}_a \omega_{90}^2 \left( \gamma \omega_{135} \omega_{90}^2 + D_r(T)(-\omega_{135}^2 + \omega_{90}^2) \right),$$

$$T_2 = \hat{A}_a^2 D_r(T) \omega_{90}^3 + \hat{A}_a^2 \gamma \omega_{135} \omega_{90}^3 - \hat{A}_a^2 \theta \omega_{135}^2 \omega_{90}^3,$$

$$T_3 = \hat{A}_a^2 \omega_{90}^3 \hat{A}_a^2 \left( D_r(T) + \omega_{135}(\gamma - \Theta\omega_{135}) \right)^2 \omega_{90}^2,$$

$$T_4 = \hat{A}_a^2 \omega_{90}^3 4\hat{B}_a \hat{C}_a \omega_{135}(D_r(T) - \Theta\omega_{90}^2)\left( -\gamma \omega_{135} \omega_{90}^2 + D_r(T)(\omega_{135}^2 - \omega_{90}^2) \right),$$

$$T_5 = 2\omega_{135} \omega_{90}^3 \left( -\hat{A}_a^2 \omega_{135} + \hat{B}_a \hat{C}_a \omega_{90} \right),$$

und

$$T_6 = 2\hat{B}_a \hat{C}_a \omega_{135} \omega_{90}^2 (-D_r(T) + \Theta\omega_{90}^2).$$

Dabei bezeichnet $\Theta$ das Massenträgheitsmoment der Schwingstäbe der schwingfähigen Einheit im nicht von Medium bedeckten Zustand, welches beispielsweise mittels ANSYS berechnet werden kann. Weiterhin kann mithilfe der Messung von $\omega_0$ $D_r(T)$ bestimmt werden. Die Dämpfung $\gamma$ der nicht mit Medium bedeckten schwingfähigen Einheit kann schließlich mittels einer Messung des Lehr'schen Dämpfungsmaßes berechnet werden und ist gegebenenfalls sogar vernachlässigbar. Die geometrieabhängigen Parameter $\hat{A}_a$, $\hat{B}_a$ und $\hat{C}_a$ können schließlich beispielsweise mittels eines sogenannten Paramterschätzverfahrens berechnet werden, wie beispielsweise in der DE102012113045A1 oder in der bisher noch nicht veröffentlichten Schrift mit dem Aktenzeichen 102013106172.9 beschrieben. Die Frequenzen $\omega_{90}$ imd $\omega_{135}$ sind dann die während des Betriebs des vibronischen Sensors zu messenden Frequenzen bei einer vorgebbaren Phasenverschiebung von im Wesentlichen +/-90° und 45° oder -135° zwischen dem Anregesignal und dem Empfangssignal.

**Bezugszeichenliste**

1          Vibronischer Sensor

| | |
|---|---|
| 2 | Medium |
| 3 | Behälter |
| 4 | Schwingfähige Einheit |
| 5 | Elektromechanische Wandlereinheit |
| 6 | Elektronikeinheit |
| 7a,7b | Schwingstäbe der schwingfähigen Einheit |
| 8 | Membran |
| 9 | piezoelektrisches Element |
| 10 | Steatitscheibe |
| 11 | Elektroden |
| 12a, 12b | Paddel der schwingfähigen Einheit |
| 13 | erster elliptischer Zylinder |
| 14 | zweiter elliptischer Zylinder |

| | |
|---|---|
| $U_A$ | Anregesignal |
| $U_E$ | Empfangssignal |
| $\phi$ | Drehwinkel, der Schwingstäbe der schwingfähigen Einheit aus der Ruhelage |
| $\Theta$ | durch die Masse der oszillierenden Schwingstäbe hervorgerufenes Massenträgheitsmoment |
| $\gamma$ | aus der inneren Dämpfung des Schwingsystems resultierender Dämpfungskoeffizient |
| $D_r$ | Drehsteifigkeit aufgrund der Steifigkeit der Membran |
| a,b | Halbachsen des ellitpischen Zylinders |
| $l_i$ | Länge des elliptischen Zylinders |
| $a_i$ | Breite des elliptischen Zylinders |
| $d_i$ | Dicke des elliptischen Zylinders |
| $F_D$ | Druckkraft |
| $F_R$ | Reibungskraft aufgrund des den oszillierenden elliptischen Zylinders umgebenden Fluids |
| $F_{SP}$ | zusätzlich in Folge der gleichförmigen Bewegung eines elliptischen Zylinders wirkende Reibungskraft |
| $\rho$ | Dichte des Mediums |
| u | Geschwindigkeit der schwingfähigen Einheit |
| $\omega$ | Schwingungsfrequenz der schwingfähigen Einheit |
| $\omega_0$ | Kreisfrequenz der schwingfähigen Einheit im ungedämpften Fall |
| $\gamma_E$ | Euler-Konstante |
| Re | Reynoldszahl |
| $\hat{\Theta}_F$ | zusätzlich ankoppelnde Massenträgheitsmoment durch die Interaktion mit dem Medium |
| $\hat{\gamma}_F$ | zusätzlich wirkende Drehdämpfung aufgrund der Wechselwirkung der schwingfähigen Einheit mit dem Medium |
| $V(\omega)$ | Vergrößerungsfunktion, welche das Amplitudenverhalten der schwingfähigen Einheit darstellt |
| $\varphi(\omega)$ | Phasengang der schwingfähigen Einheit |
| $\hat{A}_a, \hat{B}_a, \hat{C}_a$ | geometrieabhängige Parameter |
| $\omega_{90}, \omega_{135}$ | Frequenzen entsprechend einer vorgebbaren Phasenverschiebung von 90° und 45° |
| $\varphi_{45}, \varphi_{90}$ | vorgebbare Phasenverschiebung von 45° und 90° |

**Patentansprüche**

1. Vibronischer Sensor (1) zur Überwachung von zumindest der Dichte ($\rho$) und der Viskosität ($\eta$) eines Mediums (2) in einem Behälter (3) zumindest umfassend eine mechanisch schwingfähige Einheit (4), eine Antriebs-/Empfangseinheit (5) und eine Elektronikeinheit (6),
wobei die Antriebs-/Empfangseinheit (5) dazu ausgestaltet ist, mittels eines elektrischen Anregesignals ($U_A$) die mechanisch schwingfähige Einheit (4) zu mechanischen Schwingungen anzuregen, und die mechanischen Schwingungen der mechanisch schwingfähigen Einheit (4) zu empfangen und in ein elektrisches Empfangssignal ($U_E$) umzuwandeln,
wobei die Elektronikeinheit (6) dazu ausgestaltet ist, das Anregesignal ($U_A$) ausgehend vom Empfangssignal ($U_E$) derart zu erzeugen, dass eine vorgebbare Phasenverschiebung ($\varphi_{45}$, ($\varphi_{90}$) zwischen dem Anregesignal ($U_A$) und Empfangssignal ($U_E$) vorliegt,
**gekennzeichnet dadurch,**
**dass** die Elektronikeinheit (6) dazu ausgestaltet ist, zumindest eine erste vorgebbare Phasenverschiebung ($\varphi_{90}$) und eine zweite vorgebbare Phasenverschiebung ($\varphi_{45}$) einzustellen, wobei die erste vorgebbare Phasenverschie-

bung ($\varphi_{90}$) +/-90°, und die zweite vorgebbare Phasenverschiebung ($\varphi_{45}$) 45° oder -135° beträgt, wobei im Falle, dass die erste vorgebbare Phasenverschiebung -90° ist, die zweite vorgebbare Phasenverschiebung -135° beträgt, und wobei im Falle, dass die erste vorgebbare Phasenverschiebung +90° beträgt, die zweite vorgebbare Phasenverschiebung 45° beträgt,

und **dass** die Elektronikeinheit (6) dazu ausgestaltet ist eine der jeweiligen vorgebbaren Phasenverschiebung ($\varphi_{90}$, ($\varphi_{45}$) entsprechende erste Frequenz ($\omega_{90}$) und zweite Frequenz ($\omega_{135}$) zu ermitteln, und aus den beiden Frequenzen ($\omega_{90}$, $\omega_{135}$) mittels einer ersten analytischen Formel die Dichte ($\rho$) und mittels einer zweiten analytischen Formel die Viskosität ($\eta$) des Mediums (2) zu bestimmen.

**2.** Vibronischer Sensor nach Anspruch 1,
**gekennzeichnet dadurch**
**dass** die schwingfähige Einheit (4) in einer definierten Position innerhalb des Behälters (3) angeordnet ist, derart, dass sie bis zu einer bestimmbaren Eintauchtiefe in das Medium (2) eintaucht.

**3.** Vibronischer Sensor nach zumindest einem der vorhergehenden Ansprüche,
**gekennzeichnet dadurch,**
**dass** die Elektronikeinheit (6) dazu ausgestaltet ist, einen vorgegebenen Füllstand des Mediums (2) in dem Behälter (3) zu bestimmen und/oder zu überwachen.

**4.** Vibronischer Sensor nach zumindest einem der vorhergehenden Ansprüche,
**gekennzeichnet dadurch,**
**dass** die schwingfähige Einheit (4) eine Membran, ein Einstab oder eine Schwinggabel umfassend zwei auf eine Membran 8 aufgebrachte Schwingstäbe (7a,7b) ist.

**5.** Vibronischer Sensor nach zumindest einem der vorhergehenden Ansprüche,
**gekennzeichnet dadurch,**
**dass** die Antriebs-/Empfangseinheit (5) ein piezoelektrisches Element (9) umfasst.

**6.** Vibronischer Sensor nach zumindest einem der vorhergehenden Ansprüche,
**gekennzeichnet dadurch,**
**dass** es sich bei der Antriebs-/Empfangseinheit (5) um eine elektromagnetische Antriebs-/Empfangseinheit (5) handelt.

**7.** Vibronischer Sensor nach zumindest einem der vorhergehenden Ansprüche,
**gekennzeichnet dadurch,**
**dass** die erste analytische Formel und/oder die zweite analytische Formel aus der Lösung einer Bewegungsgleichung für eine Schwingungsbewegung der schwingfähigen Einheit (4) resultieren, welche die Interaktion der schwingfähigen Einheit (4) mit dem Medium (2) in Form einer Druckkraft ($F_D$) und einer Reibungskraft ($F_R$), welche durch das die schwingfähige Einheit umgebende Medium entstehen, sowie einer Reibungskraft ($F_{SP}$), welche infolge einer gleichförmigen Bewegung der schwingfähigen Einheit (4) innerhalb des Mediums (2) entsteht, berücksichtigt.

**8.** Vibronischer Sensor nach zumindest einem der vorhergehenden Ansprüche,
**gekennzeichnet dadurch,**
**dass** es sich bei der schwingfähigen Einheit (4) um eine Schwinggabel umfassend zwei auf eine Membran (8) aufgebrachte Schwingstäbe (7a,7b) handelt,

**dass** die Elektronikeinheit (6) dazu ausgestaltet ist, die Dichte ($\rho$) nach der Formel $\rho = -\dfrac{T_2 + T_6 + \sqrt{T_3 + T_4}}{\hat{B}_a T_5}$ und/oder

die Viskosität ($\eta$) nach der Formel $\eta = \dfrac{T_1 + \omega_{135}(T_2 - \sqrt{T_3 + T_4})}{\hat{C}_a T_5}$ zu berechnen, wobei

$$T_1 = -2\hat{B}_a \hat{C}_a \omega_{90}^2 \big(\gamma \omega_{135} \omega_{90}^2 + D_r(T)(-\omega_{135}^2 + \omega_{90}^2)\big),$$

$$T_2 = \hat{A}_a^2 D_r(T) \omega_{90}^3 + \hat{A}_a^2 \gamma \omega_{135} \omega_{90}^3 - \hat{A}_a^2 \theta \omega_{135}^2 \omega_{90}^3,$$

$$T_3 = \hat{A}_a^2 \omega_{90}^3 \hat{A}_a^2 \big(D_r(T) + \omega_{135}(\gamma - \Theta\omega_{135})\big)^2 \omega_{90}^2,$$

$$T_4 = \hat{A}_a^2 \omega_{90}^3 4\hat{B}_a\hat{C}_a\omega_{135}\big(D_r(T) - \Theta\omega_{90}^2\big)\big(-\gamma\omega_{135}\omega_{90}^2 + D_r(T)(\omega_{135}^2 - \omega_{90}^2)\big),$$

$$T_5 = 2\omega_{135}\omega_{90}^3\big(-\hat{A}_a^2\omega_{135} + \hat{B}_a\hat{C}_a\omega_{90}\big),$$

und

$$T_6 = 2\hat{B}_a\hat{C}_a\omega_{135}\omega_{90}^2\big(-D_r(T) + \Theta\omega_{90}^2\big)$$

ist,

wobei $\Theta$ das Massenträgheitsmoment von den zwei Schwingstäben (7a,7b) der schwingfähigen Einheit (4) im nicht von Medium (2) bedeckten Zustand ist,
wobei $\omega_0$ die Kreisfrequenz der schwingfähigen Einheit (4) im ungedämpften Fall ist,
wobei $D_r(T)$ die temperaturabhängige Drehsteifigkeit der Membran (8) ist,
wobei $\gamma$ die Dämpfung der nicht mit Medium (2) bedeckten schwingfähigen Einheit (4) ist, und
wobei $\hat{A}_a$, $\hat{B}_a$ und $\hat{C}_a$ geometrieabhängige Parameter sind.

9. Verfahren zur Bestimmung der Dichte ($\rho$) und Viskosität ($\eta$) eines Mediums (2) in einem Behälter (3) mittels eines vibronischen Sensors (1), insbesondere mittels eines Sensors (1) gemäß zumindest einem der vorhergehenden Ansprüche,
wobei eine schwingfähige Einheit (4) mittels eines elektrischen Anregesignals ($U_A$) zu mechanischen Schwingungen angeregt wird, und die mechanischen Schwingungen der mechanisch schwingfähigen Einheit (4) empfangen und in ein elektrisches Empfangssignal ($U_E$) umgewandelt werden,
wobei das Anregesignal ($U_A$) ausgehend vom Empfangssignal ($U_E$) derart erzeugt wird, dass eine vorgebbare Phasenverschiebung zwischen dem Anregesignal ($U_A$) und dem Empfangssignal ($U_E$) vorliegt, **gekennzeichnet dadurch,**
**dass** zumindest eine erste vorgebbare Phasenverschiebung ($\varphi_{90}$) und eine zweite vorgebbare Phasenverschiebung ($\varphi_{45}$) eingestellt werden, und eine der jeweiligen vorgebbaren Phasenverschiebung ($\varphi_{90}$, $\varphi_{45}$) entsprechende erste Frequenz ($\omega_{90}$) und zweite Frequenz ($\omega_{135}$) zu ermittelt wird,
wobei als erste vorgebbare Phasenverschiebung $\varphi_{90}$ +/-90°, und als zweite vorgebbare Phasenverschiebung ($\varphi_{45}$) 45° oder -135° eingestellt wird, wobei im Falle, dass die erste vorgebbare Phasenverschiebung -90° ist, die zweite vorgebbare Phasenverschiebung -135° beträgt, und wobei im Falle, dass die erste vorgebbare Phasenverschiebung +90° beträgt, die zweite vorgebbare Phasenverschiebung 45° beträgt und dass aus den beiden Frequenzen ($\omega_{90}$, $\omega_{135}$) mittels einer ersten analytischen Formel die Dichte ($\rho$) und mittels einer zweiten analytischen Formel die Viskosität ($\eta$) des Mediums (2) bestimmt wird.

10. Verfahren nach Anspruch 9,
**gekennzeichnet dadurch,**
**dass** ein vorgegebener Füllstand des Mediums (2) in dem Behälter (3) überwacht wird.

11. Verfahren nach zumindest einem der Ansprüche 9 oder 10,
**gekennzeichnet dadurch,**
**dass** die erste analytische Formel und/oder die zweite analytische Formel aus der Lösung einer Bewegungsgleichung für eine Schwingungsbewegung der schwingfähigen Einheit (4) resultieren, für welche die Interaktion der schwingfähigen Einheit (4) mit dem Medium (2) in Form einer Druckkraft ($F_D$) und einer Reibungskraft ($F_R$), welche durch das die schwingfähige Einheit umgebende Medium entstehen, sowie einer Reibungskraft ($F_{SP}$), welche infolge einer gleichförmigen Bewegung der schwingfähigen Einheit (4) innerhalb des Mediums (2) entsteht, berücksichtigt wird.

12. Verfahren nach zumindest einem der Ansprüche 9-11,
**gekennzeichnet dadurch,**
**dass** es sich bei der schwingfähigen Einheit (4) um eine Schwinggabel umfassend zwei auf eine Membran (8)

aufgebrachte Schwingstäbe (7a,7b) handelt,

**dass** die Dichte ($\rho$) nach der Formel $\rho = -\frac{T_2+T_6+\sqrt{T_3+T_4}}{\hat{B}_a T_5}$ und/oder die Viskosität ($\eta$) nach der Formel $\eta = \frac{T_1+\omega_{135}(T_2-\sqrt{T_3+T_4})}{\hat{C}_a T_5}$ berechnet wird, wobei

$$T_1 = -2\hat{B}_a \hat{C}_a \omega_{90}^2 \left(\gamma \omega_{135} \omega_{90}^2 + D_r(T)(-\omega_{135}^2 + \omega_{90}^2)\right),$$

$$T_2 = \hat{A}_a^2 D_r(T)\omega_{90}^3 + \hat{A}_a^2 \gamma \omega_{135}\omega_{90}^3 - \hat{A}_a^2 \theta \omega_{135}^2 \omega_{90}^3,$$

$$T_3 = \hat{A}_a^2 \omega_{90}^3 \hat{A}_a^2 \left(D_r(T) + \omega_{135}(\gamma - \Theta\omega_{135})\right)^2 \omega_{90}^2,$$

$$T_4 = \hat{A}_a^2 \omega_{90}^3 4\hat{B}_a \hat{C}_a \omega_{135}(D_r(T) - \Theta\omega_{90}^2)\left(-\gamma\omega_{135}\omega_{90}^2 + D_r(T)(\omega_{135}^2 - \omega_{90}^2)\right),$$

$$T_5 = 2\omega_{135}\omega_{90}^3 \left(-\hat{A}_a^2 \omega_{135} + \hat{B}_a \hat{C}_a \omega_{90}\right),$$

und

$$T_6 = 2\hat{B}_a \hat{C}_a \omega_{135}\omega_{90}^2 \left(-D_r(T) + \Theta\omega_{90}^2\right)$$

ist,

wobei $\Theta$ das Massenträgheitsmoment von den zwei Schwingstäben (7a,7b) der schwingfähigen Einheit (4) im nicht von Medium (2) bedeckten Zustand ist,
wobei $\omega_0$ die Kreisfrequenz der schwingfähigen Einheit (4) im ungedämpften Fall ist,
wobei $D_r(T)$ die temperaturabhängige Drehsteifigkeit der Membran (8) ist,
wobei $\gamma$ die Dämpfung der nicht mit Medium (2) bedeckten schwingfähigen Einheit (4) ist, und
wobei $\hat{A}_a$, $\hat{B}_a$ und $\hat{C}_a$ geometrieabhängige Parameter sind.

## Claims

1. Vibronic sensor (1) designed to monitor at least the density ($\rho$) and the viscosity ($\eta$) of a medium (2) in a vessel (3), at least comprising a unit capable of vibrating mechanically (4), a drive/reception unit (5) and an electronics unit (6), wherein the drive/reception unit (5) is designed to excite the unit capable of vibrating mechanically (4) to produce mechanical vibrations by means of an electrical excitation signal ($U_A$), and to receive the mechanical vibrations of the unit capable of vibrating mechanically (4) and to convert them into an electrical reception signal ($U_E$), wherein the electronics unit (6) is designed to generate the excitation signal ($U_A$) from the reception signal ($U_E$) in such a way that a predefinable phase shift ($\varphi45$, $\varphi90$) exists between the excitation signal ($U_A$) and the reception signal ($U_E$),
**characterized in that**
the electronics unit (6) is designed to set at least a first predefinable phase shift ($\varphi90$) and a second predefinable phase shift ($\varphi5$), the first predefinable phase shift ($\varphi90$) being +/-90° and the second predefinable phase shift ($\varphi45$) being 45° or -135°,
wherein, in the event that the first predefinable phase shift is -90° the second predefinable phase shift is -135° and in the event that the first predefinable phase shift is +90° the second predefinable phase shift is 45°,
and **in that** the electronics unit (6) is designed to determine a first frequency ($\omega90$) and a second frequency ($\omega135$) corresponding respectively to the predefinable phase shift ($\varphi90$, $\varphi45$), and to use the two frequencies ($\varphi90$, $\varphi135$) to determine the density ($\rho$) of the medium (2) using a first analytical formula and the viscosity ($\eta$) of the medium (2) using the second analytical formula.

2. Vibronic sensor as claimed in Claim 1,
**characterized in that**
the unit capable of vibrating (4) is arranged in a defined position inside the vessel (3) in such a way that it is immersed in the medium (2) as far as a definable immersion depth.

3. Vibronic sensor as claimed in at least one of the previous claims,
**characterized in that**
the electronics unit (6) is designed to determine and/or monitor a predefined level of the medium (2) in the vessel (3).

4. Vibronic sensor as claimed in at least one of the previous claims,
**characterized in that**
the unit capable of vibrating (4) is a membrane, a single rod or a tuning fork comprising two vibrating rods (7a, 7b) placed on a membrane (8).

5. Vibronic sensor as claimed in at least one of the previous claims,
**characterized in that**
the drive/reception unit (5) comprises a piezoelectric element (9).

6. Vibronic sensor as claimed in at least one of the previous claims,
**characterized in that**
the drive/reception unit (5) is an electromagnetic drive/reception unit (5).

7. Vibronic sensor as claimed in at least one of the previous claims,
**characterized in that**
the first analytical formula and/or the second analytical formula result from the solution of an equation of movement for a vibration movement of the unit capable of vibrating (4), which takes into account the interaction of the unit capable of vibrating (4) with the medium (2) in the form of a pressure force ($F_D$) and a friction force ($F_R$) which come from the medium surrounding the unit capable of vibrating, as well as a friction force ($F_{SP}$), which results from a uniform movement of the unit capable of vibrating (4) inside the medium (2).

8. Vibronic sensor as claimed in at least one of the previous claims,
**characterized in that**
the unit capable of vibrating (4) is a tuning fork comprising two vibrating rods (7a, 7b) placed on a membrane (8), and **in that** the electronics unit (6) is designed to calculate the density ($\rho$)

$$\rho = -\frac{T_2 + T_6 + \sqrt{T_3 + T_4}}{\hat{B}_a T_5}$$

according to the formula and/or the viscosity ($\eta$) according to the formula $\eta = \frac{T_1 + \omega_{135}(T_2 - \sqrt{T_3 + T_4})}{\hat{C}_a T_5}$, where

$$T_1 = -2\hat{B}_a\hat{C}_a\omega_{90}^2\big(\gamma\omega_{135}\omega_{90}^2 + D_r(T)(-\omega_{135}^2 + \omega_{90}^2)\big),$$

$$T_2 = \hat{A}_a^2 D_r(T)\omega_{90}^3 + \hat{A}_a^2\gamma\omega_{135}\omega_{90}^3 - \hat{A}_a^2\theta\omega_{135}^2\omega_{90}^3,$$

$$T_3 = \hat{A}_a^2\omega_{90}^3\hat{A}_a^2\big(D_r(T) + \omega_{135}(\gamma - \Theta\omega_{135})\big)^2\omega_{90}^2,$$

$$T_4 = \hat{A}_a^2\omega_{90}^3 4\hat{B}_a\hat{C}_a\omega_{135}(D_r(T) - \Theta\omega_{90}^2)(-\gamma\omega_{135}\omega_{90}^2 + D_r(T)(\omega_{135}^2 - \omega_{90}^2)),$$

$$T_5 = 2\omega_{135}\omega_{90}^3\big(-\hat{A}_a^2\omega_{135} + \hat{B}_a\hat{C}_a\omega_{90}\big),$$

and

$$T_6 = 2\hat{B}_a\hat{C}_a\omega_{135}\omega_{90}^2(-D_r(T) + \Theta\omega_{90}^2)$$

,

where θ is the moment of inertia of the two vibrating rods (7a, 7b) of the unit capable of vibrating (4) in the state when the unit is not covered by medium (2), wherein $\omega_0$ is the angular frequency of the unit capable of vibrating (4) in the unattenuated state,
wherein $D_r(T)$ is the temperature-dependent torsional stiffness of the membrane (8),
wherein $\gamma$ is the attenuation of the unit capable of vibrating not covered by the medium (2), and
wherein $\hat{A}_a$, $\hat{B}_a$ and $\hat{C}_a$ are parameters dependent on the geometry.

9. Procedure designed to determine the density ($\rho$) and the viscosity ($\eta$) of a medium (2) in a vessel (3) using a vibronic sensor (1), particularly using a sensor (1) as claimed in at least one of the previous claims,
wherein a unit capable of vibrating (4) is excited by an electrical excitation signal ($U_A$) to perform mechanical vibrations, and the mechanical vibrations of the unit capable of vibrating (4) are received and converted to an electrical reception signal ($U_E$),
wherein the excitation signal ($U_A$) is generated from the reception signal ($U_E$) in such a way that a predefinable phase shift exists between the excitation signal ($U_A$) and the reception signal ($U_E$),
**characterized in that**
at least a first predefinable phase shift ($\varphi90$) and a second predefinable phase shift ($\varphi45$) are set, and a first frequency ($\omega90$) and a second frequency ($\omega135$) corresponding to the respective predefinable phase shift ($\varphi90$, $\varphi45$) are determined,
wherein the first predefinable phase shift ($\varphi90$) is set to +/-90° and the second predefinable phase shift ($\varphi45$) is set to 45° or to -135°,
wherein in the event that the first predefinable phase shift is -90° the second predefinable phase shift is -135°, and in the event that the first predefinable phase shift is +90° the second predefinable phase shift is 45°,
and wherein the two frequencies ($\omega90$, $\omega135$) are used to determine the density ($\rho$) of the medium (2) using a first analytical formula and to determine the viscosity ($\eta$) of the medium (2) using a second analytical formula.

10. Procedure as claimed in Claim 9,
**characterized in that**
a predefined level of the medium (2) in the vessel (3) is monitored.

11. Procedure as claimed in at least one of the Claims 9 or 10,
**characterized in that**
the first analytical formula and/or the second analytical formula result from the solution of an equation of movement for a vibration movement of the unit capable of vibrating (4) which takes into account the interaction of the unit capable of vibrating (4) with the medium (2) in the form of a pressure force ($F_D$) and a friction force ($F_R$), which result from the medium surrounding the unit capable of vibrating, as well as a friction force ($F_{SP}$), which results from a uniform movement of the unit capable of vibrating (4) inside the medium (2).

12. Procedure as claimed in at least one of the Claims 9 to 11,
**characterized in that**
the unit capable of vibrating (4) is a tuning fork comprising two vibrating rods (7a, 7b) placed on a membrane (8),

that the density ($\rho$) is calculated according to the formula $\rho = -\dfrac{T_2+T_6+\sqrt{T_3+T_4}}{\hat{B}_aT_5}$ and/or the viscosity ($\eta$) is

calculated according to the formula $\eta = \dfrac{T_1+\omega_{135}(T_2-\sqrt{T_3+T_4})}{\hat{C}_aT_5}$ , where

$$T_1 = -2\hat{B}_a\hat{C}_a\omega_{90}^2\left(\gamma\omega_{135}\omega_{90}^2 + D_r(T)(-\omega_{135}^2 + \omega_{90}^2)\right),$$

$$T_2 = \hat{A}_a^2 D_r(T)\omega_{90}^3 + \hat{A}_a^2 \gamma \omega_{135} \omega_{90}^3 - \hat{A}_a^2 \theta \omega_{135}^2 \omega_{90}^3,$$

$$T_3 = \hat{A}_a^2 \omega_{90}^3 \hat{A}_a^2 \big(D_r(T) + \omega_{135}(\gamma - \Theta\omega_{135})\big)^2 \omega_{90}^2,$$

$$T_4 = \hat{A}_a^2 \omega_{90}^3 4 \hat{B}_a \hat{C}_a \omega_{135}(D_r(T) - \Theta\omega_{90}^2)\big(-\gamma \omega_{135}\omega_{90}^2 + D_r(T)(\omega_{135}^2 - \omega_{90}^2)\big),$$

$$T_5 = 2\omega_{135}\omega_{90}^3\big(-\hat{A}_a^2 \omega_{135} + \hat{B}_a \hat{C}_a \omega_{90}\big),$$

and

$$T_6 = 2\hat{B}_a \hat{C}_a \omega_{135}\omega_{90}^2(-D_r(T) + \Theta\omega_{90}^2)$$,

where $\theta$ is the moment of inertia of the two vibrating rods (7a, 7b) of the unit capable of vibrating (4) in the state when the unit is not covered by medium (2),
wherein $\omega_0$ is the angular frequency of the unit capable of vibrating (4) in the unattenuated state,
wherein $D_r(T)$ is the temperature-dependent torsional stiffness of the membrane (8),
wherein $\gamma$ is the attenuation of the unit capable of vibrating not covered by the medium (2), and
wherein $\hat{A}_a$, $\hat{B}_a$ and $\hat{C}_a$ are parameters dependent on the geometry.

**Revendications**

1. Capteur vibronique (1) destiné à la surveillance au minimum de la densité ($\rho$) et de la viscosité ($\eta$) d'un produit (2) dans un réservoir (3), comprenant au minimum une unité apte à vibrer mécaniquement (4), une unité d'entraînement / de réception (5) et une unité électronique (6),
l'unité d'entraînement / de réception (5) étant conçue pour exciter, au moyen d'un signal d'excitation électrique ($U_A$), l'unité apte à vibrer mécaniquement (4) en excitations mécaniques, et à recevoir les vibrations mécaniques de l'unité apte à vibrer mécaniquement (4) et à les convertir en un signal de réception électrique (UE),
l'unité électronique (6) étant conçue pour générer le signal d'excitation ($U_A$) à partir du signal de réception ($U_E$), de telle sorte qu'un déphasage prédéfinissable ($\varphi45$, $\varphi90$) soit présent entre le signal d'excitation ($U_A$) et le signal de réception ($U_E$),
**caractérisé**
**en ce que** l'unité électronique (6) est conçue pour régler au moins un premier déphasage prédéfinissable ($\varphi90$) et un deuxième déphasage prédéfinissable ($\varphi45$), le premier déphasage prédéfinissable ($\varphi90$) étant de +/-90° et le deuxième déphasage prédéfinissable ($\varphi45$) étant de 45° ou de -135°,
le deuxième déphasage prédéfinissable étant de -135° dans le cas où le premier déphasage prédéfinissable est de -90°, et le deuxième déphasage prédéfinissable étant de 45° dans le cas où le premier déphasage prédéfinissable est de +90°,
et **en ce que** l'unité électronique (6) est conçue pour déterminer une première fréquence ($\omega90$) et une deuxième fréquence ($\omega135$) correspondant respectivement aux déphasages prédéfinissables $\varphi90$, $\varphi45$), et à déterminer à partir des deux fréquences ($\omega90$, $\omega135$) la densité ($\rho$) du produit (2) au moyen de la première formule analytique et la viscosité ($\eta$) du produit (2) au moyen de la deuxième formule analytique.

2. Capteur vibronique selon la revendication 1,
**caractérisé**
**en ce que** l'unité apte à vibrer (4) est disposée dans une position définie à l'intérieur du réservoir (3), de telle sorte qu'elle soit immergée jusqu'à une profondeur d'immersion définissable dans le produit (2).

3. Capteur vibronique selon au moins l'une des revendications précédentes,
**caractérisé**
**en ce que** l'unité électronique (6) est conçue pour déterminer et/ou surveille un niveau prédéfini du produit (2) dans le réservoir (3).

4. Capteur vibronique selon au moins l'une des revendications précédentes,
**caractérisé**
**en ce que** l'unité apte à vibrer (4) est une membrane, une monotige ou une fourche vibrante comprenant deux tiges vibrantes (7a, 7b) placées sur une membrane (8).

5. Capteur vibronique selon au moins l'une des revendications précédentes,
**caractérisé**
**en ce que** l'unité d'entraînement / de réception (5) comprend un élément piézoélectrique (9).

6. Capteur vibronique selon au moins l'une des revendications précédentes,
**caractérisé**
**en ce que**, concernant l'unité d'entraînement / de réception (5), il s'agit d'une unité d'entraînement / de réception électromagnétique.

7. Capteur vibronique selon au moins l'une des revendications précédentes,
**caractérisé**
**en ce que** la premier formule analytique et/ou la deuxième formule analytique résultent de la solution d'une équation de mouvement pour un mouvement de vibration de l'unité apte à vibrer (4), laquelle prend en compte l'interaction de l'unité apte à vibrer (4) avec le produit (2) sous forme d'une force de pression ($F_D$) et d'une force de frottement ($F_R$), qui proviennent du produit entourant l'unité apte à vibrer, ainsi que d'une force de frottement ($F_{SP}$), qui résulte d'un mouvement uniforme de l'unité apte à vibrer (4) à l'intérieur du produit (2).

8. Capteur vibronique selon au moins l'une des revendications précédentes,
**caractérisé**
**en ce que**, concernant l'unité apte à vibrer (4), il s'agit d'une fourche vibrante comprenant deux tiges vibrantes (7a, 7b) placées sur une membrane (8),
**en ce que** l'unité électronique (6) est conçue pour calculer la densité ($\rho$) d'après la formule

$$\rho = -\frac{T_2 + T_6 + \sqrt{T_3 + T_4}}{\hat{B}_a T_5}$$ et/ou la viscosité ($\eta$) d'après la formule $\eta = \dfrac{T_1 + \omega_{135}(T_2 - \sqrt{T_3 + T_4})}{\hat{C}_a T_5}$ , où

$$T_1 = -2\hat{B}_a \hat{C}_a \omega_{90}^2 \big(\gamma \omega_{135} \omega_{90}^2 + D_r(T)(-\omega_{135}^2 + \omega_{90}^2)\big),$$

$$T_2 = \hat{A}_a^2 D_r(T)\omega_{90}^3 + \hat{A}_a^2 \gamma \omega_{135} \omega_{90}^3 - \hat{A}_a^2 \theta \omega_{135}^2 \omega_{90}^3,$$

$$T_3 = \hat{A}_a^2 \omega_{90}^3 \hat{A}_a^2 \big(D_r(T) + \omega_{135}(\gamma - \Theta\omega_{135})\big)^2 \omega_{90}^2,$$

$$T_4 = \hat{A}_a^2 \omega_{90}^3 4\hat{B}_a \hat{C}_a \omega_{135}(D_r(T) - \Theta\omega_{90}^2)\big(-\gamma \omega_{135}\omega_{90}^2 + D_r(T)(\omega_{135}^2 - \omega_{90}^2)\big),$$

$$T_5 = 2\omega_{135}\omega_{90}^3\big(-\hat{A}_a^2 \omega_{135} + \hat{B}_a \hat{C}_a \omega_{90}\big),$$

et

$$T_6 = 2\hat{B}_a \hat{C}_a \omega_{135}\omega_{90}^2(-D_r(T) + \Theta\omega_{90}^2)$$ ,

$\theta$ étant le moment d'inertie des deux tiges vibrantes (7a, 7b) de l'unité apte à vibrer (4) dans l'état non recouvert par le produit (2),

$\omega_0$ étant la fréquence angulaire de l'unité apte à vibrer (4) dans l'état non recouvert,

$D_r(T)$ étant la rigidité à la torsion de la membrane (8) dépendant de la température,

$\gamma$ étant l'amortissement de l'unité apte à vibrer non recouverte par le produit (2), et

$\hat{A}_a$, $\hat{B}_a$ et $\hat{C}_a$ étant des paramètres dépendant de la géométrie.

**9.** Procédé destiné à la détermination de la densité ($\rho$) et de la viscosité ($\eta$) d'un produit (2) dans un réservoir (3) au moyen d'un capteur vibronique (1), notamment au moyen d'un capteur (1) selon au moins l'une des revendications précédentes,

l'unité apte à vibrer (4) étant excitée au moyen d'un signal d'excitation électrique ($U_A$) en vibrations mécaniques, et les vibrations mécaniques de l'unité apte à vibrer (4) étant reçues et converties en un signal de réception électrique ($U_E$), le signal d'excitation ($U_A$) étant généré à partir du signal de réception ($U_E$), de telle sorte qu'un déphasage prédéfinissable soit présent entre le signal d'excitation ($U_A$) et le signal de réception ($U_E$),

**caractérisé**

**en ce que** sont réglés au moins un premier déphasage prédéfinissable ($\varphi 90$) et un deuxième déphasage prédéfinissable ($\varphi 45$), et une première fréquence ($\omega 90$) et une deuxième fréquence ($\omega 135$) correspondant respectivement aux déphasages prédéfinissables ($\varphi 90$, $\varphi 45$) étant déterminées,

le premier déphasage prédéfinissable ($\varphi 90$) étant réglé à +/-90° et le deuxième déphasage prédéfinissable ($\varphi 45$) étant réglé à 45° ou à -135°,

le deuxième déphasage prédéfinissable étant de -135° dans le cas où le premier déphasage prédéfinissable est de -90°, et le deuxième déphasage prédéfinissable étant de 45° dans le cas où le premier déphasage prédéfinissable est de +90°,

et **en ce que** sont déterminées, à partir des deux fréquences ($\omega 90$, $\omega 135$), la densité ($\rho$) du produit (2) au moyen de la première formule analytique et la viscosité ($\eta$) du produit (2) au moyen de la deuxième formule analytique.

**10.** Procédé selon la revendication 9,

**caractérisé**

**en ce qu'**est surveillé un niveau prédéfini du produit (2) dans le réservoir (3).

**11.** Procédé selon au moins l'une des revendications 9 ou 10,

**caractérisé**

**en ce que** la première formule analytique et/ou la deuxième formule analytique résultent de la résolution d'une équation de mouvement pour un mouvement de vibration de l'unité apte à vibrer (4) avec le produit (2), équation pour laquelle l'interaction de l'unité apte à vibrer (4) avec le produit (2) est prise en compte sous la forme d'une force de pression ($F_D$) et d'une force de frottement ($F_R$), qui proviennent du produit entourant l'unité apte à vibrer, ainsi que d'une force de frottement ($F_{SP}$), qui résulte d'un mouvement uniforme de l'unité apte à vibrer (4) à l'intérieur du produit (2).

**12.** Procédé selon au moins l'une des revendications 9 à 11,

**caractérisé**

**en ce que**, concernant l'unité apte à vibrer (4), il s'agit d'une fourche vibrante comprenant deux tiges vibrantes (7a, 7b) placées sur une membrane (8), en ce que la densité ($\rho$) est calculée d'après la formule

$$\rho = -\frac{T_2 + T_6 + \sqrt{T_3 + T_4}}{\hat{B}_a T_5}$$

et/ou la viscosité ($\eta$) est calculée d'après la formule

$$\eta = \frac{T_1 + \omega_{135}(T_2 - \sqrt{T_3 + T_4})}{\hat{C}_a T_5}$$

, où

$$T_1 = -2\hat{B}_a \hat{C}_a \omega_{90}^2 \left( \gamma \omega_{135} \omega_{90}^2 + D_r(T)(-\omega_{135}^2 + \omega_{90}^2) \right),$$

$$T_2 = \hat{A}_a^2 D_r(T) \omega_{90}^3 + \hat{A}_a^2 \gamma \omega_{135} \omega_{90}^3 - \hat{A}_a^2 \theta \omega_{135}^2 \omega_{90}^3,$$

$$T_3 = \hat{A}_a^2 \omega_{90}^3 \hat{A}_a^2 \left( D_r(T) + \omega_{135}(\gamma - \Theta \omega_{135}) \right)^2 \omega_{90}^2,$$

$$T_4 = \hat{A}_a^2 \omega_{90}^3 4\hat{B}_a \hat{C}_a \omega_{135}(D_r(T) - \Theta\omega_{90}^2)\big(-\gamma\omega_{135}\omega_{90}^2 + D_r(T)(\omega_{135}^2 - \omega_{90}^2)\big),$$

$$T_5 = 2\omega_{135}\omega_{90}^3\big(-\hat{A}_a^2 \omega_{135} + \hat{B}_a \hat{C}_a \omega_{90}\big),$$

et

$$T_6 = 2\hat{B}_a \hat{C}_a \omega_{135}\omega_{90}^2\big(-D_r(T) + \Theta\omega_{90}^2\big)$$
,

$\theta$ étant le moment d'inertie des deux tiges vibrantes (7a, 7b) de l'unité apte à vibrer (4) dans l'état non recouvert par le produit (2),

$\omega_0$ étant la fréquence angulaire de l'unité apte à vibrer (4) dans l'état non recouvert,

$D_r(T)$ étant la rigidité à la torsion de la membrane (8) dépendant de la température,

$\gamma$ étant l'amortissement de l'unité apte à vibrer non recouverte par le produit (2), et

$\hat{A}_a$, $\hat{B}_a$ et $\hat{C}_a$ étant des paramètres dépendant de la géométrie.

Fig. 1

Fig. 2

Fig. 3a    Fig. 3b    Fig. 3c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006034105 A1
- DE 102007013557 A1
- DE 102005015547 A1
- DE 102009026685 A1
- DE 102009028022 A1
- DE 102010030982 A1
- DE 00102010030982 A1
- DE 10050299 A1
- DE 102007043811 A1
- DE 10057974 A1
- DE 102006033819 A1
- WO 2014179050 A1
- US 5323638 A
- DE 102012113045 A1

**In der Beschreibung aufgeführte Nicht-Patentliteratur**

- **W. Y. SHIH ; X. LI ; H. GU ; W. H. SHIH ; I. A. AKSAY.** Simultaneous liquid viscosity and density determination with piezoelectric unimorph cantilevers. *Journal of Applied Physics,* 2001, vol. 89 (2), 1497-1505
- **J. E. SADER.** Frequency response of cantilever beams immersed in viscous fluids with applications to the atomic force microscope. *Journal of Applied Physics,* 1998, vol. 84 (1), 64-76
- Reihe B. G. Teubners Sammlung von Lehrbüchern auf dem Gebiet der mathematischen Wissenschaften mit Einschluss ihrer Anwendungen aus dem B. G. **H. LAMB.** Lehrbuch der Hydrodynamik. Teubner Verlag, 1907, vol. 26
- Lehrbuch der Theoretischen Physik von L. D. Landau und E. M Lifschitz erschienen. **LEHRBUCH.** Hydrodynamik. Akademie Verlag, 1991, vol. 6